# EUROPÄISCHE PATENTSCHRIFT

(11) **EP 2 234 778 B1**
(45) Veröffentlichungstag und Bekanntmachung des Hinweises auf die Patenterteilung: **19.06.2013**
(21) Anmeldenummer: 08866107.9
(22) Anmeldetag: 30.10.2008
(51) Int. Cl.: B27G 19/00, F16P 3/14, G01P 1/02, G08B 1/00

(54) **WERKZEUGMASCHINENVORRICHTUNG UND VERFAHREN MIT EINER SOLCHEN VORRICHTUNG**
MACHINE TOOL DEVICE AND METHOD WITH SUCH A MACHINE TOOL DEVICE
ENSEMBLE MACHINE-OUTIL ET PROCÉDÉ AVEC CE ENSEMBLE MACHINE-OUTIL

(30) Priorität: 21.12.2007 DE 102007062996
(43) Veröffentlichungstag der Anmeldung: 06.10.2010
(73) Patentinhaber: Robert Bosch GmbH, 70442 Stuttgart (DE)
(72) Erfinder: NIEHSEN, Wolfgang, 31162 Bad Salzdetfurth (DE); WINGBERMUEHLE, Jochen, 30966 Hemmingen (DE); HEILER, Matthias, CH-8055 Zürich (CH)
(86) Internationale Anmeldenummer: PCT/EP2008/064738
(87) Internationale Veröffentlichungsnummer: WO 2009/083297

(56) Entgegenhaltungen:
- EP-A- 1 061 487
- EP-A- 1 586 805
- EP-A1- 1 605 405
- WO-A1-2004/039074
- WO-A1-2006/054201
- WO-A2-2007/119183
- US-A1- 2005 207 618

## Beschreibung

### Stand der Technik

Die Erfindung geht aus von einer Werkzeugmaschinenvorrichtung nach dem Oberbegriff des Anspruchs 1.

Eine derartige Werkzeugmaschinenvorrichtung geht beispielsweise aus des GP 1 586 805 A1 hervor.

Es ist eine Tischkreissäge bekannt, die eine Videokamera zur Überwachung eines Arbeitsbereichs umfasst. Es ist ferner eine Auswerteeinheit vorgesehen, die dazu dient, anhand einer mittels der Videokamera erfassten Bildsequenz die Geschwindigkeit eines sich im Arbeitsbereich bewegenden Objekts zu ermitteln.

Das videobasiertes System der US-20060096425-A1 dient dem automatischen Anhalten einer Kreissäge bei Annäherung eines menschlichen Körperteiles an das Sägeblatt. Zur Auslösung des Bremsmechanismus wird das Videosignal mit Methoden der Mustererkennung ausgewertet. Als Merkmale für die Erkennung von Körperteilen werden beispielhaft allgemein deren runde Formen und ihre Bewegungen genannt.

Aus der EP 1 586 805 A1 ist ein Verfahren zur Überwachung eines Überwachungsbereichs bekannt, bei dem Videobilder verwendet werden, die in zeitlicher Folge von wenigstens zwei Videokameras erfasst werden. Dabei sind die Sichtfelder derart angeordnet, dass sich diese wenigstens teilweise in einem Überschneidungsbereich in dem Überwachungsbereich überscheiden. Auf der Basis der von einer ersten Videokamera erfassten Videobilder wird eine erste und auf der Basis der von einer zweiten der Videokameras erfassten zweiten Videobilder wird ein zweite Erkennung und/oder Verfolgung von Objekten durchgeführt, die Gegenständen in dem Überschneidungsbereich entsprechen.

Aus der US2005/0207618A1 sind ein Verfahren und eine Vorrichtung zur Erzeugung eines Schutzbereiches im Gefährdungsbereich einer Maschine bekannt. Dabei wird mit zumindest zwei voneinander beanstandeten Kameras simultan der Gefährdungsbereich aufgenommen. Die aufgenommenen Bilder werden dann mittels verschiedenen Bildauswertungsalgorithmen unterschiedlichen drei-dimensionalen Bildanalyse-Verfahren unterzogen. Falls auch nur eines der Auswerteverfahren ein fremdes Objekt im Gefahrenbereich der Maschine detektiert, werden automatisierte Sicherungsmaßnahmen getroffen.

### Vorteile der Erfindung

Die Erfindung geht aus von einer Werkzeugmaschinenvorrichtung mit einer Überwachungseinheit zur Überwachung von zumindest einem Werkzeugmaschinenüberwachungsbereich, die eine Auswerteeinheit aufweist.

Die Erfindung betrifft eine Werkengmashinenvorrichtung gemäß Anspruch 1.

Es wird vorgeschtagen, dass die Auswerteeinheit eine Recheneinheit aufweist, die dazu vorgesehen ist, zumindest zwei Bewegungen im Werkzeugmaschinenüberwachungsbereich zu unterscheiden. Es kann dadurch eine hohe Zuverlässigkeit bei der Überwachung des Werkzeugmaschinenüberwachungsbereichs erreicht werden. Insbesondere kann eine hohe Anzahl von Anwendungssituationen erkannt werden, die bei einer Anwendung einer Werkzeugmaschine eintreten können und potentiell eine Gefahr für einen Anwender darstellen. Unter einer "Bewegung im Werkzeugmaschinenüberwachungsbereich" soll insbesondere eine Bewegung von einem sich im Werkzeugmaschinenüberwachungsbereich bewegenden Objekt verstanden werden, die relativ zu einem Bauteil einer Werkzeugmaschine, insbesondere relativ zu einem Werkzeug, erfolgt. Erfindungsgemäß kann zwischen den Bewegungen von zwei unterschiedlichen Objekten unterschieden werden, die sich zum gleichen Zeitpunkt im Werkzeugmaschinenüberwachungsbereich relativ zum Bauteil bewegen. Besonders vorteilhaft kann bei einem Werkstückbearbeitungsvorgang zwischen einer Bewegung eines Werkstücks und eines weiteren Objekts, wie vorteilhaft eines Körperteils eines Anwenders, differenziert werden. Die Bewegung eines Objekts kann durch die Bewegung des Massenmittelpunkts des Objekts charakterisiert werden. Die Überwachungseinheit weist vorzugsweise eine Erfassungseinheit zur Erfassung von Daten auf, wobei die Auswerteeinheit insbesondere dazu dient, von der Erfassungseinheit erfasste Daten auszuwerten. Die Erfassungseinheit ist hierbei insbesondere dazu ausgelegt, den Werkzeugmaschinenüberwachungsbereich zu erfassen. Die Erfassungseinheit weist zu einem "Erfassen" des Werkzeugmaschinenüberwachungsbereichs ein insbesondere durch eine Optik festgelegtes Blickfeld auf, das zumindest den Werkzeugmaschinenüberwachungsbereich umfasst oder das dem Werkzeugmaschinenüberwachungsbereich entspricht.

Unter "vorgesehen" soll insbesondere speziell ausgelegt, ausgestattet und/oder programmiert verstanden werden. Unter einem "Unterscheiden" von zumindest zwei Bewegungen soll insbesondere ein Unterscheiden einer ersten Bewegungskenngröße, welche eine Bewegung eines ersten Objekts charakterisiert, von einer zweiten Bewegungskenngröße, welche eine Bewegung eines zweiten, vom ersten Objekt unterschiedlichen Objekts charakterisiert, verstanden werden.

In einer bevorzugten Ausgestaltung der Erfindung wird vorgeschlagen, dass die Recheneinheit dazu vorgesehen ist, eine Vergleichsgröße zwischen Bewegungskenngrößen zu ermitteln, die jeweils eine unterschiedliche Bewegung charakterisieren, wodurch ein einfacher und schneller Unterscheidungsvorgang erreicht werden kann. Die Auswerteeinheit weist hierbei vorzugsweise ein Auswertemittel auf, das dazu dient, anhand von durch die Erfassungseinheit erfassten Daten die Bewegungskenngrößen auszuwerten.

Insbesondere charakterisieren die Bewegungskenngrößen jeweils einen Geschwindigkeitswert. Hierdurch kann besonders einfach ein erheblicher Geschwindigkeitsunterschied zwischen zwei Objekten einfach erkannt werden. Somit kann beispielsweise bei der Bearbeitung eines Werkstücks ein Abrutschen einer Hand eines Anwenders von einer Bewegung des Werkstücks schnell erkannt werden. Eine Bewegungskenngröße, die einen Geschwindigkeitswert charakterisiert, kann z.B. eine Größe sein, die proportional zum tatsächlichen Geschwindigkeitswert ist.

Ferner können die Bewegungskenngrößen jeweils eine Bewegungsrichtung charakterisieren. Hierdurch kann eine Abweichung der Bewegung eines Objekts, insbesondere einer Hand eines Anwenders, von einer sicheren Bewegung effektiv erkannt werden. Insbesondere kann eine Abweichung einer Bewegung von einer bevorzugten Arbeitsrichtung, in welcher ein Werkstück unter normalen und sicheren Bedingungen vom Anwender befördert wird, erkannt werden. Eine Bewegungskenngröße, die eine Bewegungsrichtung charakterisiert, ist z.B. eine Größe, die proportional zu einem Winkel ist oder die einem Winkel entspricht, den die Bewegungsrichtung mit einer Referenzrichtung, wie z.B. der Arbeitsrichtung, bildet.

Gemäß der Erfindung wird vorgeschlagen, dass die Recheneinheit dazu vorgesehen ist, ein Bewegungsvektorfeld zu bestimmen, wodurch eine besonders hohe Informationsdichte erreicht werden kann. Unter einem "Bewegungsvektorfeld" soll insbesondere eine Sammlung von Punkten verstanden werden, wobei jedem Punkt der Sammlung jeweils ein Vektor zugeordnet ist, welcher die Bewegung des Punkts charakterisiert. Ein Bewegungsvektorfeld kann hierbei auch als "Bewegungsfluss" bezeichnet werden.

In diesem Zusammenhang wird vorgeschlagen, dass die Recheneinheit dazu vorgesehen ist, in zumindest einem Betriebsmodus im Bewegungsvektorfeld zumindest zwei Regionen einheitlicher Geschwindigkeit zu unterscheiden, wodurch eine besonders effektive Geschwindigkeitsunterscheidung erreicht werden kann. Unter einer "Region einheitlicher Geschwindigkeit" soll insbesondere ein zusammenhängender Teilbereich des Bewegungsvektorfelds verstanden werden, in welchem die den Punkten des Teilbereichs zugeordneten Vektoren zumindest im Wesentlichen identisch sind. Unter einer Sammlung von Vektoren, die "im Wesentlichen identisch" sind, soll insbesondere eine Sammlung von Vektoren verstanden werden, die durch eine durchschnittliche Vektorlänge und eine durchschnittliche Vektorrichtung charakterisiert ist, wobei die einzelnen Vektoren bezüglich ihrer Richtung und ihrer Länge jeweils um weniger als 30%, vorteilhaft um weniger als 10% und bevorzugt um weniger als 5% der durchschnittlichen Richtung bzw. Länge von der durchschnittlichen Richtung bzw. Länge abweichen. Hierbei ist eine Vektorrichtung vorzugsweise mittels eines Winkels relativ zu einer bevorzugten Richtung der Werkzeugmaschine definiert, wie insbesondere zu einer Arbeitsrichtung, in welcher bei einem Werkstückbearbeitungsvorgang ein Werkstück gegen ein Werkzeug bewegt wird.

In einer weiteren Ausführungsvariante wird vorgeschlagen, dass die Recheneinheit dazu vorgesehen ist, anhand des Bewegungsvektorfelds das Vorhandensein eines menschlichen Körperteils im Werkzeugmaschinenüberwachungsbereich zu erkennen. Hierdurch kann vorteilhafterweise auf weitere Mittel zur Erkennung eines menschlichen Körperteils verzichtet werden. Dies kann z.B. dadurch erfolgen, dass eine Ausdehnung einer Region einheitlicher Geschwindigkeit ermittelt wird und insbesondere mit vorgespeicherten Daten verglichen wird, die die typische Ausdehnung von menschlichen Körperteilen charakterisieren.

In einer bevorzugten Ausgestaltung der Erfindung wird vorgeschlagen, dass die Recheneinheit dazu vorgesehen ist, die Bewegungen mittels einer Auswertung von optischen Daten voneinander zu unterscheiden, wodurch eine einfache und kostengünstige Ausgestaltung der Werkzeugmaschinenvorrichtung erreicht werden kann. Unter "optischen Daten" sollen insbesondere Daten verstanden werden, die mittels zumindest einer Bildaufnahme gewonnen werden. Besonders vorteilhaft ist die Erfassungseinheit als Bilderfassungseinheit, wie insbesondere als Videokamera, ausgebildet, die zur Bildaufnahme des Werkzeugmaschinenüberwachungsbereichs vorgesehen ist. Hierbei ist die Auswerteeinheit zur Auswertung von zumindest einer Bildaufnahme der Erfassungseinheit vorteilhaft mit einem Bildverarbeitungsprogramm versehen. Die Erfassungseinheit ist insbesondere zur Bilderfassung im sichtbaren Bereich vorgesehen. Eine Ausbildung der Erfassungseinheit zur Bilderfassung in einem unsichtbaren Bereich, wie z.B. in einem Infrarotbereich, ist ebenfalls möglich. Insbesondere weist die Auswerteeinheit ein Auswertemittel auf, das dazu vorgesehen ist, Bewegungskenngrößen anhand einer von der Erfassungseinheit erfassten Bildsequenz mit zumindest zwei Bildern zu ermitteln.

Ein besonders zuverlässiges Unterscheiden von zwei Bewegungen in einer Bildsequenz kann in diesem Zusammenhang erreicht werden, wenn die Recheneinheit dazu vorgesehen ist, die Bewegungen mittels einer Methode des optischen Flusses zu unterscheiden. Hiermit kann einfach, mit gängigen Mitteln ein Bewegungsvektorfeld ermittelt werden. Unter dem "optischen Fluss" soll insbesondere ein Vektorfeld verstanden werden, das einer Projektion von Geschwindigkeitsvektoren auf eine Bildebene einer Bildsequenz entspricht und welches mittels einer Auswertung von Grauwertveränderungen in der Bildsequenz bestimmbar ist.

Vorzugsweise weist die Werkzeugmaschinenvorrichtung eine Sicherheitsvorrichtung auf, die zur Durchführung einer Sicherheitsmaßnahme in Abhängigkeit eines Signals der Auswerteeinheit vorgesehen ist. Durch ein derartiges Zusammenwirken der Auswerteeinheit und einer Sicherheitsvorrichtung können besonders kurze Reaktionszeiten bei der Erkennung einer Gefahrensituation bei der Anwendung einer Werkzeugmaschine erreicht werden. Die Sicherheitsvorrichtung weist insbesondere zumindest eine Aktorikeinheit, die zur Durchführung einer ein Werkzeug betreffenden Sicherheitsmaßnahme dient, und eine Steuereinheit auf, die dazu vorgesehen ist, abhängig von einem Signal der Auswerteeinheit die Aktorikeinheit zu betätigen. Die Aktorikeinheit kann dazu dienen, einen Antrieb des Werkzeugs zu stoppen, wie z.B. im Zusammenwirken mit Sicherungsmitteln und/oder mit einer Antriebseinheit, und/oder sie kann dazu dienen, das Werkzeug in einen für einen Anwender unzugänglichen Bereich zu verfahren, und/oder sie kann dazu ausgelegt sein, das Werkzeug zu bedecken.

Die Recheneinheit ist dazu vorgesehen, eine Vergleichsgröße zwischen Bewegungskenngrößen zu ermitteln, die jeweils eine unterschiedliche Bewegung charakterisieren, und der Vergleichsgröße eine Sicherheitsstufe der Sicherheitsvorrichtung zuzuordnen. Hierdurch kann eine Sicherheitsmaßnahme nach Eintritt einer Gefahrensituation besonders schnell getroffen werden. Unter einer "Sicherheitsstufe" soll insbesondere ein Kennzeichen für einen bestimmten Sicherheitsmodus verstanden werden. In einer niedrigen Sicherheitsstufe kann ein erster Sicherheitsmodus dazu dienen, einen Antrieb des Werkzeugs fortzuführen. Es ist vorteilhaft zumindest eine zweite, hohe Sicherheitsstufe vorgesehen, die einem zweiten Sicherheitsmodus entspricht, in welchem eine Sicherheitsmaßnahme von der Aktorikeinheit und/oder der Steuereinheit durchgeführt wird. Die Sicherheitsstufen können insbesondere in einer Speichereinheit vorgespeichert sein, mit welcher die Recheneinheit in Wirkverbindung steht.

Die Erfindung geht ferner aus von einem Verfahren mit einer Werkzeugmaschinenvorrichtung gemäß Anspruch 1 mittels welcher ein Werkzeugmaschinenüberwachungsbereich einer Werkzeugmaschine überwacht wird, bei welchem Daten erfasst werden.

Es wird vorgeschlagen, dass anhand der Daten zumindest zwei Bewegungen im Werkzeugmaschinenüberwachungsbereich voneinander unterschieden werden. Es kann dadurch eine hohe Zuverlässigkeit bei der Überwachung des Werkzeugmaschinenüberwachungsbereichs erreicht werden. Insbesondere kann eine hohe Anzahl von Anwendungssituationen erkannt werden, die bei einer Anwendung einer Werkzeugmaschine eintreten können und potentiell eine Gefahr für einen Anwender darstellen.

Ferner wird vorgeschlagen, dass eine Vergleichsgröße zwischen Bewegungskenngrößen ermittelt wird, die jeweils eine unterschiedliche Bewegung charakterisieren, und dass der Vergleichsgröße eine Sicherheitsstufe einer Sicherheitsvorrichtung zugeordnet wird, mittels welcher eine Sicherheitsmaßnahme durchgeführt wird. Hierdurch kann eine Sicherheitsmaßnahme nach Eintritt einer Gefahrensituation besonders schnell getroffen werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmä-βigerweise auch einzeln betrachten und zu sinnvollen weiteren Kombinationen zusammenfassen.

Es zeigen:
- Fig. 1: eine Sägemaschine mit einer Arbeitsfläche, einem Sägeblatt und einer Überwachungseinheit,
- Fig. 2: eine interne Schaltung der Sägemaschine, mit einer Videokamera und einer Auswerteeinheit,
- Fig. 3a: ein von der Auswerteeinheit, anhand einer Bildsequenz der Videokamera ermitteltes Bewegungsvektorfeld,
- Fig. 3b: ein weiteres Bewegungsvektorfeld bei einem Abrutschen einer Hand eines Anwenders auf einem Werkstück,
- Fig. 3c: die Ermittlung einer Vergleichsgröße zum Unterscheiden zwischen der Bewegung der Hand und des Werkstücks in der in Figur 3b dargestellten Situation und
- Fig. 4: ein Auswerteverfahren der Auswerteeinheit.

### Beschreibung der Ausführungsbeispiele

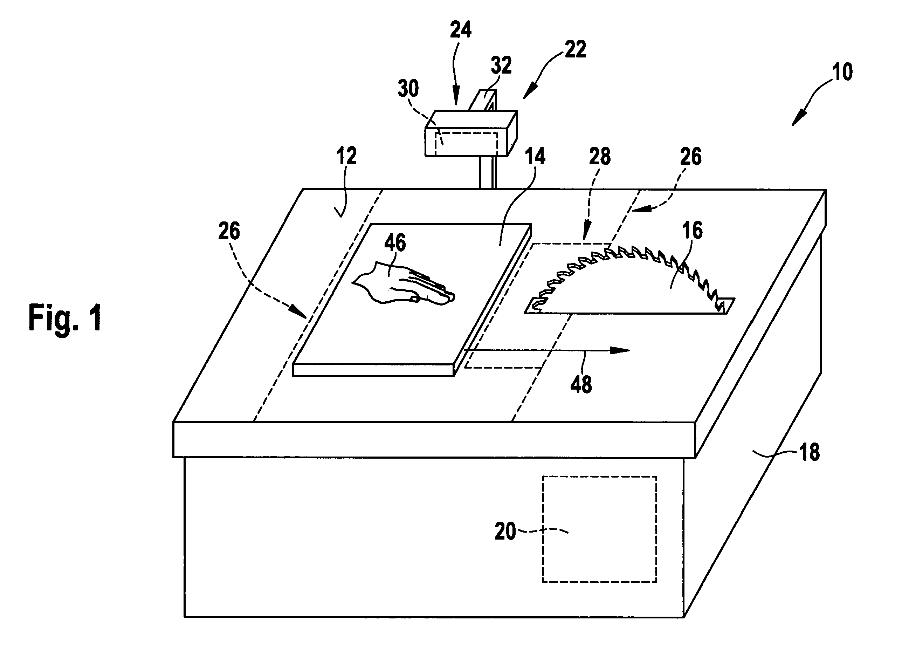

Figur 1 zeigt eine als Tischkreissäge ausgebildete Werkzeugmaschine 10 in einer perspektivischen Ansicht. Diese weist eine Arbeitsfläche 12 auf, die als Werkstückauflagefläche zum Auflegen eines zu bearbeitenden Werkstücks 14 ausgebildet ist und in einer Grundeinbaustellung der Werkzeugmaschine 10 horizontal ausgerichtet ist. Aus der Arbeitsfläche 12 herausragend ist ein als kreisförmiges Sägeblatt ausgebildetes Werkzeug 16 angeordnet. In einem Werkstückbearbeitungsvorgang wird das Werkzeug 16 von einer Antriebseinheit 20, die sich in einem unterhalb der Arbeitsfläche 12 angeordneten Antriebsgehäuse 18 befindet und als Elektromotor ausgeführt ist, zu einer Rotation angetrieben.

Die Werkzeugmaschine 10 umfasst eine Werkzeugmaschinenvorrichtung 22 mit einer Überwachungseinheit 24. Diese Überwachungseinheit 24 ist dazu vorgesehen, einen Werkzeugmaschinenüberwachungsbereich 26 zu überwachen. Die Abgrenzung des Werkzeugmaschinenüberwachungsbereichs 26 auf der Arbeitsfläche 12 ist in Figur 1 mittels gestrichelter Linien schematisch dargestellt. Der Werkzeugmaschinenüberwachungsbereich 26 enthält einen Teilbereich der Arbeitsfläche 12 und erstreckt sich ferner, ausgehend von der Arbeitsfläche 12, vertikal nach oben. Der Werkzeugmaschinenüberwachungsbereich 26 weist einen Teilbereich auf, der im Bereich des Werkzeugs 16 angeordnet ist. Dieser Teilbereich, der als Gefahrenbereich 28 bezeichnet wird, ist in unmittelbarer Nähe des Werkzeugs 16 angeordnet. Insbesondere grenzt der Gefahrenbereich 28 direkt an das Werkzeug 16 an. Dieser Gefahrenbereich 28 stellt einen Bereich dar, in welchem ein Eindringen eines Körperteils eines Bedieners der Werkzeugmaschine 10 zu vermeiden ist. Die Überwachungseinheit 24 weist eine als Bilderfassungseinheit ausgeführte Erfassungseinheit 30 auf, die dazu dient, den Werkzeugmaschinenüberwachungsbereich 26 zu erfassen. Hierzu weist die Erfassungseinheit 30 ein Blickfeld auf, das dem zu überwachenden Werkzeugmaschinenüberwachungsbereich 26 entspricht. Die Erfassungseinheit 30 ist im gezeigten Ausführungsbeispiel in einer die Arbeitsfläche 12 überstehenden Position angeordnet. Hierbei weist die Werkzeugmaschinenvorrichtung 22 eine Haltevorrichtung 32 auf, die zum Halten der Erfassungseinheit 30 in dieser Position vorgesehen ist. Weitere, dem Fachmann als sinnvoll erscheinende Anordnungen der Erfassungseinheit 30 relativ zur Arbeitsfläche 12 sind denkbar.

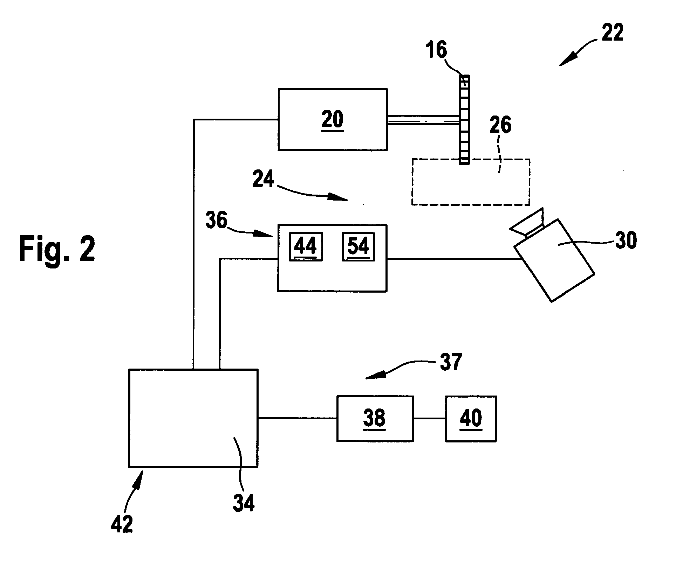

In Figur 2 ist eine interne Schaltung der Werkzeugmaschine 10 schematisch dargestellt. Die Werkzeugmaschinenvorrichtung 22 weist eine Steuereinheit 34 auf, die zum Durchführen von Betriebsmodi der Werkzeugmaschine 10 vorgesehen ist. Die Steuereinheit 34 weist nicht näher dargestellte interne Funktionselemente, wie eine Recheneinheit, beispielweise eine Speichereinheit usw., auf, die zur Durchführung von Betriebsprogrammen dienen. Die Steuereinheit 34 steht in Wirkverbindung mit der Antriebseinheit 20 und kann Steuersignale zum Steuern und/oder Regeln eines Antriebs des Werkzeugs 16 zur Antriebseinheit 20 übertragen. Die Überwachungseinheit 24 weist zusätzlich zur oben beschriebenen Erfassungseinheit 30 eine Auswerteeinheit 36 auf, die in Wirkverbindung mit der Erfassungseinheit 30 und mit der Steuereinheit 34 steht und deren Funktion unten näher beschrieben wird. Die Auswerteeinheit 36 und die Steuereinheit 34 können miteinander zumindest teilweise einstückig ausgebildet sein.

Die Werkzeugmaschinenvorrichtung 22 weist ferner eine Sicherheitsvorrichtung 37 auf, die dazu dient, Sicherheitsmaßnahmen bei einem Betrieb der Werkzeugmaschine 10 zu treffen. Hierzu weist die Sicherheitsvorrichtung 37 eine Aktorikeinheit 38 auf, die dazu ausgelegt ist, Sicherheitsmaßnahmen durchzuführen, die das Werkzeug 16 betreffen. Dieses ist nach diesen Sicherheitsmaßnahmen beim Vorliegen einer für den Bediener bestehenden Verletzungsgefahr z.B. in einen Stillstand bzw. in einen für den Bediener unzugänglichen Bereich zu versetzen. Die Aktorikeinheit 38 dient dazu, ein mit ihr in Wirkverbindung stehendes Sicherungsmittel 40 auszulösen. In einer ersten Alternative ist das Sicherungsmittel 40 dazu ausgelegt, bei einem Auslösen durch die Aktorikeinheit 38 eine Bewegung des Werkzeugs 16 zu stoppen. Hierbei ist das Sicherungsmittel 40 beispielsweise als Klemmmittel oder als Bremsmittel ausgebildet. In einer weiteren Variante ist das Sicherungsmittel 40 dazu ausgelegt, bei einem Auslösen durch die Aktorikeinheit 38 das Werkzeug 16 in einen für den Bediener unzugänglichen Bereich des Antriebsgehäuses 18 unterhalb der Arbeitsfläche 12 zu versenken. In einer weiteren Ausführung kann das Sicherungsmittel als Deckmittel zum Bedecken des Werkzeugs 16 ausgebildet sein. Das Auslösen des Sicherungsmittels 40 erfolgt durch die Aktorikeinheit 38, wenn diese ein Auslösesignal der Steuereinheit 34 empfängt. Dieses Auslösesignal wird abhängig von einem Signal der Auswerteeinheit 36 an die Aktorikeinheit 38 von der Steuereinheit 34 ausgegeben. Alternativ oder zusätzlich zur Aktorikeinheit 38 ist eine Aktorikeinheit 42 der Werkzeugmaschinenvorrichtung 22 vorgesehen, die der Steuereinheit 34 entspricht. Abhängig von einem Signal der Auswerteeinheit 36 überträgt die als Steuereinheit 34 ausgebildete Aktorikeinheit 42 ein Steuersignal zur Antriebseinheit 20, mittels dessen der Antrieb des Werkzeugs 16 gestoppt wird. Die Durchführung einer Sicherheitsmaßnahme erfolgt somit durch die Aktorikeinheit 38 und/oder 42 in Abhängigkeit von einem Signal der Auswerteeinheit 36, das das Betätigen der Aktorikeinheit 38 bzw. 42 durch die Steuereinheit 34 auslöst. Das Signal der Auswerteeinheit 36 wird an die Steuereinheit 34 übertragen, wenn durch einen Auswertevorgang anhand von durch die Erfassungseinheit 30 erfassten Daten, insbesondere Bilddaten, eine Gefahrensituation bei einem Antrieb des Werkzeugs 16 erkannt wird. Dieser Erkennungsprozess wird unten näher beschrieben.

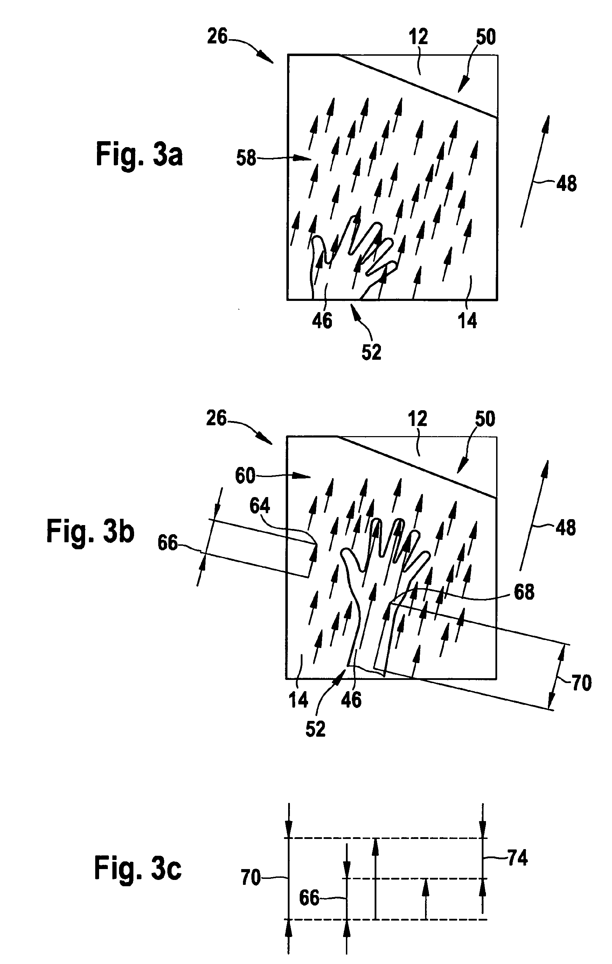

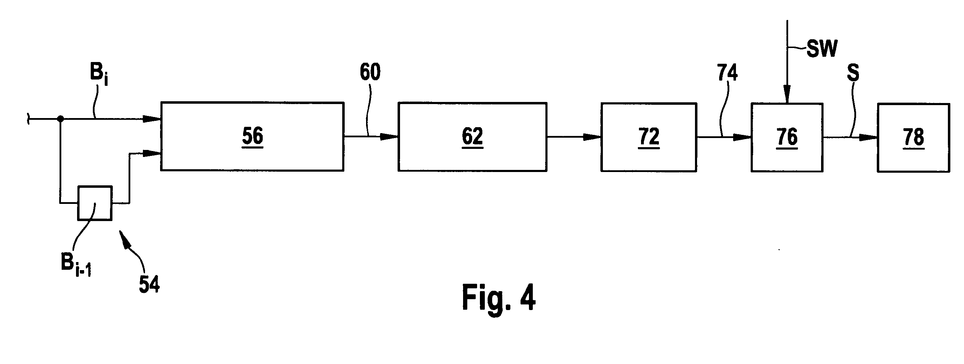

Die Auswerteeinheit 36 ist dazu vorgesehen, eine Bewegung eines sich im von der Erfassungseinheit 30 erfassten Werkzeugmaschinenüberwachungsbereich 26 bewegenden Objektes zu berücksichtigen. Ein Auswertevorgang durch die Auswerteeinheit 36 erfolgt anhand einer von der Erfassungseinheit 30 erfassten Datenmenge. In dieser Ausführung ist die Erfassungseinheit 30 als Bilderfassungseinheit, und zwar als Videokamera ausgeführt, die zu einer Bilderfassung im sichtbaren Bereich vorgesehen ist. Eine Ausführung der Erfassungseinheit 30 zu einer Erfassung in einem unsichtbaren Bereich, wie z.B. in einem Infrarotbereich, ist ebenfalls denkbar. Ein Auswertevorgang der Auswerteeinheit 36 erfolgt anhand von einer durch die Erfassungseinheit 30 erfassten Bildsequenz. Erfindungsgemäß weist die Auswerteeinheit 36 eine Recheneinheit 44 auf, die dazu vorgesehen ist, zumindest zwei Bewegungen im Werkzeugmaschinenüberwachungsbereich zu unterscheiden. Dies wird anhand der Figuren 3a, 3b, 3c und 4 näher erläutert.

Die Figuren 3a und 3b stellen einen Teilbereich des von der Erfassungseinheit 30 erfassten Werkzeugmaschinenüberwachungsbereichs 26 dar. Es ist die Arbeitsfläche 12 zu erkennen, auf welcher das Werkstück 14 aufgelegt ist. Auf dem Werkstück 14 ist eine Hand 46 eines Anwenders abgestützt, welcher das Werkstück 14 in einer Arbeitsrichtung 48 gegen das Werkzeug 16 führt (siehe auch Figur 1). Bei einem Werkstückbearbeitungsvorgang führen das Werkstück 14 und die Hand 46 jeweils eine Bewegung im von der Erfassungseinheit 30 erfassten Werkzeugmaschinenüberwachungsbereich 26 aus. Im Folgenden wird das Werkstück 14 als Objekt 50 und die Hand 46 als Objekt 52 bezeichnet. Die Recheneinheit 44 ist dazu vorgesehen, eine Vergleichsgröße zwischen einer ersten Bewegungskenngröße, die der Bewegung des ersten Objekts 50 zugeordnet ist, und einer zweiten Bewegungskenngröße, die der Bewegung des zweiten Objekts 52 zugeordnet ist, zu ermitteln. Die Recheneinheit 44 kann einen Mikroprozessor aufweisen oder sie kann als Mikroprozessor ausgebildet sein. Sie wertet eine Bildsequenz der Erfassungseinheit 30 mittels eines Programms aus, insbesondere eines Bildverarbeitungsprogramms, das in einer Speichereinheit 54 der Auswerteeinheit 36 gespeichert ist.

Der Ablauf des Auswerteprozesses durch die Auswerteeinheit 36 ist in einem Flussdiagramm in Figur 4 dargestellt. Zu einem Zeitpunkt tᵢ₋₁ wird von der Erfassungseinheit 30 ein Bild Bᵢ₋₁ des Werkzeugmaschinenüberwachungsbereichs 26 erfasst. Dieses Bild Bᵢ₋₁ wird gespeichert, wie z.B. in der Speichereinheit 54. Zu einem späteren Zeitpunkt tᵢ wird ein weiteres Bild Bᵢ des Werkzeugmaschinenüberwachungsbereichs 26 erfasst. Die Daten der Bilder Bᵢ₋₁ und Bᵢ werden durch die Recheneinheit 44 mittels des Bildverarbeitungsprogramms in einem Auswerteschritt 56 ausgewertet. Insbesondere wird die Bewegung von einzelnen Punkten im Werkzeugmaschinenüberwachungsbereich 26 mittels eines Vergleichs der Bilder Bᵢ und Bᵢ₋₁ analysiert und es wird dadurch von der Recheneinheit 44 ein Bewegungsvektorfeld ermittelt. Hierbei wird vom Bildverarbeitungsprogramm eine Methode des optischen Flusses verwendet. Es wird in der Bildsequenz Bᵢ₋₁, Bᵢ die Bewegung von Pixelgebieten analysiert, die in dieser Bildsequenz eine konstante Helligkeit aufweisen. Durch einen Vergleich der Positionen eines Pixelgebiets in den Bildern Bᵢ₋₁ und Bᵢ wird diesem Pixelgebiet ein Bewegungsvektor zugeordnet. Ein Bewegungsvektor charakterisiert die Bewegung des Pixelgebiets in deren Richtung und Größe. Durch die Zuordnung eines Bewegungsvektors zu jedem der Pixelgebiete entsteht ein Bewegungsvektorfeld 58 oder 60, das in Figur 3a bzw. 3b dargestellt ist. Alternativ oder zusätzlich zur Methode des optischen Flusses können Bewegungsvektore Pixelgebieten zugeordnet werden, die sich durch ein Farbenmerkmal, ein Texturmerkmal, ein bestimmtes Motiv usw. auszeichnen.

In einem nächsten Auswerteschritt 62 erfolgt eine Segmentierung des Bewegungsvektorfelds 58 bzw. 60. Hierbei werden Regionen des Bewegungsvektorfelds 58 bzw. 60, die durch eine einheitliche Geschwindigkeit charakterisiert sind, ermittelt. In der in Figur 3a dargestellten Situation, in welcher der Bediener das Werkstück 14 entlang der Arbeitsfläche 12 in Arbeitsrichtung 48 schiebt, weisen das Objekt 50 und das Objekt 52 im Wesentlichen die gleiche Geschwindigkeit auf, und zwar sowohl hinsichtlich der Richtung, die der Arbeitsrichtung 48 entspricht, als auch hinsichtlich der Größe. Mit dem Segmentierungsschritt wird durch die Recheneinheit 44 erkannt, dass in der Bildsequenz Bᵢ₋₁, Bᵢ der gesamte Bildbereich, zu welchem das Bewegungsvektorfeld 58 zugeordnet wurde, eine einheitliche Geschwindigkeit aufweist. In der Situation der Figur 3b wird angenommen, dass die Hand 46 bei einem Schieben des Werkstücks 14 in Richtung auf das Werkzeug 16 abrutscht. Das bei dieser Situation im Auswerteschritt 56 anhand der Bilder Bᵢ₋₁ und Bᵢ ermittelte Bewegungsvektorfeld 60 ist in Figur 3b dargestellt. In dem Auswerteschritt 62 werden durch die Segmentierung des Bewegungsvektorfelds 60 zwei Regionen erkannt, die jeweils durch eine einheitliche Geschwindigkeit charakterisiert sind. Eine erste Region entspricht dem Objekt 50, d.h. dem Werkstück 14, während eine zweite Region dem Objekt 52, d.h. der rutschenden Hand 46, entspricht. Die erste Region ist hierbei durch zwei Bewegungskenngrößen 64, 66 gekennzeichnet, die der Richtung bzw. der Länge des Bewegungsvektors entsprechen, welcher der Region einheitlich zugeordnet ist. Die Bewegungskenngrößen 64, 66 sind hierbei zwei Geschwindigkeitskenngrößen. Die Bewegungskenngröße 64 charakterisiert die Richtung der Geschwindigkeit, während die Bewegungskenngröße 66 proportional zum Geschwindigkeitswert ist. Die Bewegungskenngröße 64 entspricht insbesondere einem Winkel, den die Vektorrichtung mit der Arbeitsrichtung 48 bildet und der der Übersichtlichkeit halber nicht näher dargestellt ist. Die zweite Region ist dementsprechend durch zwei Bewegungskenngrößen 68, 70 gekennzeichnet. Mittels der Segmentierung des Bewegungsvektorfelds 60 im Auswerteschritt 62 wird ferner die Ausdehnung einer Region einheitlicher Geschwindigkeit ermittelt. Diese wird mit vorgespeicherten Daten der Speichereinheit 54 verglichen, die die charakteristische Ausdehnung von geläufigen, sich potentiell im Werkzeugmaschinenüberwachungsbereich 26 bewegenden Objekten, wie z.B. die charakteristische Ausdehnung einer Hand, kennzeichnen. Somit können die Objekte 50, 52 als Werkstück 14 einerseits und menschlicher Körperteil, und zwar als Hand 46, andererseits erkannt werden. Der Auswerteschritt 62 der Recheneinheit 44 erlaubt daher, anhand des Bewegungsvektorfelds 60 das Vorhandensein eines menschlichen Körperteils im Werkzeugmaschinenüberwachungsbereich 26 zu erkennen. Dieser Auswerteschritt 62 ist optional. Es ist in einer Ausführungsvariante denkbar, dass ein menschlicher Körperteil in einem Auswerteschritt des Bildverarbeitungsprogramms anhand eines Farbmerkmals, Texturmerkmals und/oder Konturmerkmals erkannt wird. In einer weiteren Ausführungsvariante ist denkbar, dass die Überwachungseinheit 24 zusätzlich zur Erfassungseinheit 30 ein Sensormittel aufweist, das zu einer Materialerkennung, insbesondere zur Erkennung von menschlichem Gewebe, dient. Beispielsweise kann das Sensormittel als Infrarotsensor oder als Radarsensor ausgebildet sein. In Zusammenwirken mit der Erfassungseinheit 30 können somit verschiedenen Bereichen des erfassten Werkzeugmaschinenüberwachungsbereichs 26 verschiedene Materialien zugeordnet werden. In diesen Ausführungsvarianten kann die Bewegung der erkannten Hand 46 lediglich durch einen ihr im Auswerteschritt 56 zugeordneten Bewegungsvektor charakterisiert werden, ohne dafür Regionen einheitlicher Geschwindigkeit ermitteln zu müssen.

Die Recheneinheit 44 wertet in einem weiteren Auswerteschritt 72 eine Vergleichsgröße zwischen der Bewegungskenngröße 64, 68 bzw. eine Vergleichsgröße zwischen der Bewegungskenngröße 66 und 70 aus. Anhand einer Vergleichsgröße kann die Recheneinheit 44 ggf. einen Unterschied zwischen den Bewegungsrichtungen der Objekte 50, 52 erkennen. Beispielsweise kann die Vergleichsgröße eine Winkelgröße sein, die einen durch die entsprechenden Bewegungsvektore gebildeten Winkel charakterisiert. In der vorliegenden Situation der Figur 3b sind diese Bewegungsrichtungen im Wesentlichen identisch. Daraus kann von der Recheneinheit 44 erkannt werden, dass sich das Objekt 52, d.h. die Hand 46, in Richtung auf das Werkzeug 16 bewegt. Aus einem Vergleich der Bewegungskenngrößen 66, 70 ermittelt die Recheneinheit 44 eine Vergleichsgröße 74, anhand welcher ggf. unterschiedliche Geschwindigkeitswerte der Objekte 50, 52 erkannt werden können. Diese Vergleichsgröße 74 kann z.B. einem Längenunterschied zwischen den Bewegungsvektoren, die die Bewegungen der Objekte 50, 52 charakterisieren, entsprechen. Dies ist in Figur 3c dargestellt.

In einem weiteren Auswerteschritt 76 wertet die Recheneinheit 44 die anhand der Bewegungskenngrößen ermittelten Vergleichsgrößen, insbesondere die Vergleichsgröße 74, aus. In der Situation der Figur 3b wird einem Überschreiten der Vergleichsgröße 74 von einem vorbestimmten Schwellenwert SW eine hohe Sicherheitsstufe S der Sicherheitsvorrichtung 37 zugeordnet. Gemäß dieser Sicherheitsstufe S überträgt die Auswerteeinheit 36 in einem Schritt 78 ein Signal an die Steuereinheit 34, die wie oben beschrieben, Sicherheitsmaßnahmen der Aktorikeinheit 38 und/oder 42 einleitet. Der voreingestellte Schwellenwert SW ist beispielsweise in der Speichereinheit 54 vorgespeichert.

In der in Figur 3a dargestellten Situation ordnet die Recheneinheit 44 der Tatsache einer einheitlichen Geschwindigkeit des gesamten erfassten Teilbereichs des Werkzeugmaschinenüberwachungsbereichs 26 eine niedrige Sicherheitsstufe der Sicherheitsvorrichtung 37 zu. Gemäß dieser Sicherheitsstufe wird ein Antrieb des Werkzeugs 16 fortgeführt.

Die Werkzeugmaschinenvorrichtung 22 eignet sich ferner bei anderen Typen von Werkzeugmaschinen, wie z.B. Kapp- und Gehrungssägen, Paneelsägen, Bandsägen usw.

## Patentansprüche

1. Werkzeugmaschinenvorrichtung mit einer Überwachungseinheit (24) zur Überwachung von zumindest einem Werkzeugmaschinenüberwachungsbereich (26), die eine Auswerteeinheit aufweist, **dadurch gekennzeichnet, dass** die Auswerteeinheit (36) eine Recheneinheit (44) aufweist, die dazu vorgesehen ist, ein Bewegungsvektorfeld (58, 60) zu bestimmen und zwei Bewegungen im Werkzeugmaschinenüberwachungsbereich (26) zu unterscheiden, wobei die Recheneinheit (44) dazu vorgesehen ist, eine Vergleichsgröße zwischen einer ersten Bewegungskenngröße, die der Bewegung eines ersten Objekts (50) zugeordnet ist, und einer zweiten Bewegungskenngröße, die der Bewegung eines zweiten Objekts (52) zugeordnet ist, zu ermitteln.

2. Werkzeugmaschinenvorrichtung nach Anspruch 1, **dadurch gekennzeichnet, dass** die Recheneinheit (44) dazu vorgesehen ist, eine Vergleichsgröße (74) zwischen Bewegungskenngrößen (64, 66, 68, 70) zu ermitteln, die jeweils eine unterschiedliche Bewegung charakterisieren.

3. Werkzeugmaschinenvorrichtung nach Anspruch 2, **dadurch gekennzeichnet, dass** die Bewegungskenngrößen (66, 70) jeweils einen Geschwindigkeitswert charakterisieren.

4. Werkzeugmaschinenvorrichtung nach Anspruch 2, **dadurch gekennzeichnet, dass** die Bewegungskenngrößen (64, 68) jeweils eine Bewegungsrichtung charakterisieren.

5. Werkzeugmaschinenvorrichtung nach Anspruch 4, **dadurch gekennzeichnet, dass** die Recheneinheit (44) dazu vorgesehen ist, in zumindest einem Betriebsmodus im Bewegungsvektorfeld (60) zumindest zwei Regionen einheitlicher Geschwindigkeit zu unterscheiden.

6. Werkzeugmaschinenvorrichtung nach Anspruch 4 oder 5, **dadurch gekennzeichnet, dass** die Recheneinheit (44) dazu vorgesehen ist, anhand des Bewegungsvektorfelds (60) das Vorhandensein eines menschlichen Körperteils im Werkzeugmaschinenüberwachungsbereich (26) zu erkennen.

7. Werkzeugmaschinenvorrichtung nach einem der vorhergehenden Ansprüche, **dadurch gekennzeichnet, dass** die Recheneinheit (44) dazu vorgesehen ist, die Bewegungen mittels einer Auswertung von optischen Daten voneinander zu unterscheiden.

8. Werkzeugmaschinenvorrichtung nach Anspruch 7, **dadurch gekennzeichnet, dass** die Recheneinheit (44) dazu vorgesehen ist, die Bewegungen mittels einer Methode des optischen Flusses zu unterscheiden.

9. Werkzeugmaschinenvorrichtung nach einem der vorhergehenden Ansprüche, **gekennzeichnet durch** eine Sicherheitsvorrichtung (37), die zur Durchführung einer Sicherheitsmaßnahme in Abhängigkeit eines Signals der Auswerteeinheit (36) vorgesehen ist.

10. Werkzeugmaschinenvorrichtung nach den Ansprüchen 1 und 9, dadurch gekennzeichet, dass die Recheneinheit (44) dazu vorgesehen ist, der Vergleichsgröße (74) eine Sicherheitsstufe (S) der Sicherheitsvorrichtung (37) zuzuordnen.

11. Werkzeugmaschine mit einer Werkzeugmaschinenvorrichtung nach einem der vorhergehenden Ansprüche.

12. Verfahren mit einer werkzeugmaschinenvorrichtung nach einem der Ansprüche 1 bis 10, mittels welcher ein Werkzeugmaschinenüberwachungsbereich (26) einer Werkzeugmaschine (10) überwacht wird, bei welchem Daten erfasst werden, **dadurch gekennzeichnet, dass** anhand der Daten zumindest zwei Bewegungen im Werkzeugmaschinenüberwachungsbereich (26) voneinander unterschieden werden.

13. Verfahren nach Anspruch 12, **dadurch gekennzeichnet, dass** eine Vergleichsgröße (74) zwischen Bewegungskenngrößen (66, 70) ermittelt wird, die jeweils eine unterschiedliche Bewegung charakterisieren, und dass der Vergleichsgröße (74) eine Sicherheitsstufe (S) einer Sicherheitsvorrichtung (37) zugeordnet wird, mittels welcher eine Sicherheitsmaßnahme durchgeführt wird.

## Claims

1. Machine tool device with a monitoring unit (24) for monitoring at least one machine tool monitoring region (26), which has an evaluation unit, **characterized in that** the evaluation unit (36) has an arithmetic logic unit (44) which is provided in order to determine a movement vector field (58, 60) and to distinguish between two movements in the machine tool monitoring region (26), the arithmetic logic unit (44) being provided in order to determine a comparison quantity between a first movement characteristic, which is assigned to the movement of a first object (50), and a second movement characteristic, which is assigned to the movement of a second object (52).

2. Machine tool device according to Claim 1, **characterized in that** the arithmetic logic unit (44) is provided in order to determine a comparison quantity (74) between movement characteristics (64, 66, 68, 70) which respectively characterize a different movement.

3. Machine tool device according to Claim 2, **characterized in that** the movement characteristics (66, 70) respectively characterize a speed value.

4. Machine tool device according to Claim 2, **characterized in that** the movement characteristics (64, 68) respectively characterize a movement direction.

5. Machine tool device according to Claim 4, **characterized in that** the arithmetic logic unit (44) is provided in order to distinguish between at least two regions of uniform speed in the movement vector field (60) in at least one operating mode.

6. Machine tool device according to Claim 4 or 5, **characterized in that** the arithmetic logic unit (44) is provided in order to detect the presence of a human body part in the machine tool monitoring region (26) with the aid of the movement vector field (60).

7. Machine tool device according to one of the preceding claims, **characterized in that** the arithmetic logic unit (44) is provided in order to distinguish the movements from one another by means of an evaluation of optical data.

8. Machine tool device according to Claim 7, **characterized in that** the arithmetic logic unit (44) is provided in order to distinguish between the movements by means of a method of optical flux.

9. Machine tool device according to one of the preceding claims, **characterized by** a safety device (37) which is provided for carrying out a safety measure as a function of a signal of the evaluation unit (36).

10. Machine tool device according to Claims 1 and 9, **characterized in that** the arithmetic logic unit (44) is provided in order to assign a safety level (S) of the safety device (37) to the comparison quantity (74).

11. Machine tool with a machine tool device according to one of the preceding claims.

12. Method with a machine tool device according to one of Claims 1 to 10, by means of which device a machine tool monitoring region (26) of a machine tool (10) is monitored, in which method data are acquired, **characterized in that** the data are used in order to distinguish from one another at least two movements in the machine tool monitoring region (26).

13. Method according to Claim 12, **characterized in that** a comparison quantity (74) between movement characteristics (66, 70) which respectively characterize a different movement is determined, and **in that** the comparison quantity (74) is assigned a safety level (S) of a safety device (37) by means of which a safety measure is carried out.

## Revendications

1. Ensemble machine-outil doté d'une unité de surveillance (24) servant à la surveillance d'au moins une zone de surveillance de machine-outil (26), comportant une unité d'analyse, **caractérisé en ce que** l'unité d'analyse (36) comporte une unité de calcul (44) prévue pour déterminer un champ de vecteur de mouvement (58, 60) et pour différencier deux mouvements dans la zone de surveillance de machine-outil (26), l'unité de calcul (44) étant prévue pour calculer une grandeur de comparaison entre une première grandeur caractéristique de mouvement associée au mouvement d'un premier objet (50) et une deuxième grandeur caractéristique de mouvement associée au mouvement d'un deuxième objet (52).

2. Ensemble machine-outil selon la revendication 1, **caractérisé en ce que** l'unité de calcul (44) est prévu pour calculer une grandeur de comparaison (74) prévue entre les grandeurs caractéristiques de mouvement (64, 66, 68, 70) caractérisant respectivement un mouvement différent.

3. Ensemble machine-outil selon la revendication 2, **caractérisé en ce que** les grandeurs caractéristiques de mouvement (66, 70) caractérisent respectivement une valeur de vitesse.

4. Ensemble machine-outil selon la revendication 2, **caractérisé en ce que** les grandeurs caractéristiques de mouvement (64, 68) caractérisent respectivement une direction de déplacement.

5. Ensemble machine-outil selon la revendication 4, **caractérisé en ce que** l'unité de calcul (44) est prévue pour distinguer dans au moins un mode de fonctionnement au moins deux régions de vitesse uniforme dans le champ de vecteur de mouvement (60).

6. Ensemble machine-outil selon la revendication 4 ou 5, **caractérisé en ce que** l'unité de calcul (44) est prévue pour identifier à l'aide du champ de vecteur de mouvement (60) la présence d'une partie de corps humain dans la zone de surveillance de machine-outil (26).

7. Ensemble machine-outil selon l'une quelconque des revendications précédentes, **caractérisé en ce que** l'unité de calcul (44) est prévue pour différencier les mouvements par le biais d'une analyse des données optiques.

8. Ensemble machine-outil selon la revendication 7, **caractérisé en ce que** l'unité de calcul (44) est prévue pour différencier les mouvements à l'aide d'une méthode de flux optique.

9. Ensemble machine-outil selon l'une quelconque des revendications précédentes, **caractérisé par** la présence d'un dispositif de sécurité (37) prévu pour réaliser une mesure de sécurité en fonction d'un signal de l'unité d'analyse (36).

10. Ensemble machine-outil selon les revendications 1 et 9, **caractérisé en ce que** l'unité de calcul (44) est prévue pour associer à la grandeur de comparaison (74) un niveau de sécurité (S) du dispositif de sécurité (37).

11. Machine-outil dotée d'un ensemble machine-outil selon l'une quelconque des revendications précédentes.

12. Procédé doté d'un ensemble machine-outil selon l'une quelconque des revendications 1 à 10, à l'aide duquel une zone de surveillance de machine-outil (26) d'une machine-outil (10) est surveillée, à l'aide duquel des données sont détectées, **caractérisé en ce que** les données permettent de distinguer au moins deux mouvements dans la zone de surveillance de machine-outil (26).

13. Procédé selon la revendication 12, **caractérisé en ce qu'**une grandeur de comparaison (74) entre les grandeurs caractéristiques de mouvement (66, 70) est calculée, lesdites grandeurs caractérisant respectivement un mouvement différent et qu'à la grandeur de comparaison (74) est associée un niveau de sécurité (S) d'un dispositif de sécurité (37) à l'aide duquel une mesure de sécurité est réalisée.
